# EUROPÄISCHE PATENTSCHRIFT

(11) **EP 1 128 157 B1**
(45) Veröffentlichungstag und Bekanntmachung des Hinweises auf die Patenterteilung: **26.05.2004**
(21) Anmeldenummer: 01104071.4
(22) Anmeldetag: 20.02.2001
(51) Int. Cl.: G01B 5/255, G01B 21/26

(54) **Verfahren zur Messung der Geometrie einer Radachse eines Fahrzeugs**
Method of measuring the geometry of a wheel axis of a vehicle
Procédé pour mesurer la géométrie d'un axe d'une roue d'un véhicule

(30) Priorität: 25.02.2000 DE 10009005
(43) Veröffentlichungstag der Anmeldung: 29.08.2001
(73) Patentinhaber: Schenck Final Assembly Products GmbH, 66346 Püttlingen (DE)
(72) Erfinder: Greff, Uwe, 66271 Sitterswald (DE); Altmayer, Alois, 66750 Saarlouis (DE); Herrmann, Armin, 66292 Riegelsberg (DE); Durant, Pascal, 57900 Hundling (FR)
(74) Vertreter: Wieske, Thilo

(56) Entgegenhaltungen:
- DE-A- 3 151 613
- DE-A- 3 714 070
- DE-C- 4 427 483
- GB-A- 2 037 212
- US-A- 5 033 198
- US-A- 5 168 632

## Beschreibung

Die Erfindung betrifft ein Verfahren, bei dem die Geometrie einer Radachse einer Achse eines Fahrzeugs gemessen bzw. gemessen und eingestellt wird, wie dies im Oberbegriff des Patentanspruchs 1 definiert ist.

Der Anmelderin. ist eine Lösung bekannt, die Messung und Einstellung von Spur- und Sturzwinkeln der Radachsen von Achsen eines Kraftfahrzeugs vor deren Einbau durchzuführen, indem Adapterscheiben auf die Radflansche aufgeschraubt werden. Weiterhin werden zwei Rollen, deren Achsen im wesentlichen parallel zur Achse der Adapterscheiben laufen, auf einer Schwimmplatte angebracht. Diese Schwimmplatte ist so gelagert, dass die Achsen der Rollen auch bei einer Veränderung des Winkels der Achse der Adapterscheibe in horizontaler Ebene im wesentlichen parallel zur Achse der Adapterscheibe bleiben. Die Achse ist mit einer definierten Gewichtskraft belastbar, um die Gewichtsbelastung der Achse durch das Fahrzeug zu simulieren. Durch die Adapterscheibe und deren Lagerung auf den Rollen der Schwimmscheibe werden die Federkräfte von der Achse zum Gestell der Maschine übertragen. Daneben ist aus US 5 168 632 und US 5 033 198 bekannt, für die Vermessung der Radachsgeometrie zur Abstützung der Räder Adapter an die Radflansche auzuschrauben.

Der vorliegenden Erfindung liegt das Problem zugrunde, die Messung bzw. die Messung und Einstellung der Geometrie der Radachsen der Achse eines Fahrzeugs (Spur- und/oder Sturzwinkel) einfach realisierbar zu machen.

Dieses Problem wird erfindungsgemäß nach Anspruch 1 gelöst, wonach die Radflansche der Radachse durch ein Spannfuttersystem gehalten und stützend gelagert werden.

Dabei erweist es sich gegenüber dem beschriebenen Stand der Technik als vorteilhaft, dass die Montage der Adapterscheibe zur Durchführung der Messung mit der Notwendigkeit der anschließenden Demontage der Adapterscheibe entfällt. Die Achse kann gegriffen werden, wobei dieser Greifvorgang gleichzeitig die Durchführung der Messung - ggf. verbunden mit der Durchführung der Einstellung der Geometrie der Radachsen der Achse (Spur- und/oder Sturzwinkel) - ermöglicht. Das Spannfuttersystem übernimmt die stützende Lagerung im Sinne der Simulation der im eingebauten Zustand der Achse durch die dann ebenfalls montierten Räder auftretenden Kräfte.

Gemäß Anspruch 1 kann also eine Messung zusammen mit der Einstellung der Geometrie einer Radachse der Achse vorgenommen werden.

Bei der Ausgestaltung nach Anspruch 2 wird das Spannfutter so gelagert und gehalten, dass es zumindest um zwei Raumachsen drehbar ist.

Vorteilhaft kann sich dann das Spannfutter der momentanen Orientierung des Radflansches anpassen. Dadurch ist es besonders einfach möglich, die Einstellung der Geometrie der Radachsen der Achse vorzunehmen, während die Achse durch die Vorrichtung gehalten wird. Die Spannfutter sind dann in der Lage, sich in ihrer Orientierung auch Änderungen der Orientierung der Radflansche anzupassen, die bei einer Veränderung dieser Orientierung der Radflansche bei der Einstellung der Geometrie der Radachsen der Achse auftreten. Ebenso werden dadurch auch nicht optimale Orientierungen der Radflansche aufgrund einer fehlerhaften Einstellung vor einer Korrektur dieser Einstellung ausgeglichen.

Dazu muss das Spannfutter zum einen um eine vertikale Raumachse drehbar sein, um Änderungen des Spurwinkels eines Rades folgen zu können. Weiterhin muss das Spannfutter um eine Raumachse in horizontaler Richtung drehbar sein, die zumindest im wesentlichen senkrecht steht zur Radachse, um Änderungen des Sturzwinkels eines Rades folgen zu können.

Besonders vorteilhaft ist das Spannfutter dabei auch in der horizontalen Ebene frei bewegbar, so dass das Spannfutter dann besonders flexibel fehlerhaften Einstellungen der Geometrie der Radachsen der Achse vor einer Korrektur dieser Fehler sowie auch Änderungen dieser Einstellungen bei der Durchführung der Korrektur folgen kann.

Bei der Ausgestaltung nach Anspruch 3 wird die Achse während der Durchführung der Messung mit wechselnden Gewichtskräften beaufschlagt.

Vorteilhaft können dadurch wechselnde Gewichtsbelastungen der Achse simuliert werden. Dadurch kann besonders vorteilhaft auch eine Veränderung des Spur- und insbesondere des Sturzwinkels bei diesen veränderten Gewichtsbelastungen beobachtet und ausgewertet werden. Indem die Spannfutter durch eine Lagerung gehalten werden, die Drehbewegungen um zumindest zwei Raumachsen erlaubt, machen diese Spannfutter die Änderungen der Orientierung der Radflansche durch die geänderten Gewichtsbelastungen ebenso mit wie Änderungen der Orientierung der Radflansche bei der Einstellung der Geometrie der Radachsen der Achse sowie auch nicht optimale Orientierungen der Radflansche aufgrund einer fehlerhaften Einstellung vor einer Korrektur dieser Einstellung wie dies im Zusammenhang mit Anspruch 2 erläutert wurde.

Bei der Ausgestaltung nach Anspruch 4 ist das Spannfutter um seine Mittelachse drehbar gelagert.

Dadurch wird es vorteilhaft möglich, eine Mittelung der Messung während einer Umdrehung vorzunehmen. Die Messung während einer Umdrehung kann beispielsweise am Radflansch, an der Bremsscheibe oder einer Messfläche, die an der Vorrichtung angebracht ist, durchgeführt werden. Die Messung kann beispielsweise vorgenommen werden, indem die Orientierung einer Ebene gemessen wird, die der Ebene des Rades im montierten Zustand entspricht. Dies können Messflächen sein, die an der Vorrichtung angebracht sind. Ebenso können beispielsweise die Ebenen der Radflansche erfasst werden oder die Ebenen der Bremsscheiben. Dies erfolgt, indem die Lage von drei Punkten auf den genannten Flächen erfasst wird. Daraus lässt sich dann die Orientierung der Ebene ableiten.

Wenn bezogen auf diese Messung eine Mittelung erfolgt, können systematische Abweichungen aufgrund von Toleranzen bei der Fertigung ausgeglichen werden, die zu einer Winkellage zwischen der Ebene führen, die für die Messung verwendet wird, und der Ebene des montierten Rades.

Der besseren Messgenauigkeit steht der Nachteil gegenüber, dass die Durchführung der Messung für eine Umdrehung eine bestimmte Zeit benötigt, die zu einer Vergrößerung der Taktzeit führt.

Sofern die Achse richtig aufgenommen wurde, entspricht die Mittelachse des Spannfutters der Radachse.

Bei der Ausgestaltung nach Anspruch 5 sind Messflächen vorhanden, die eben ausgebildet sind und fest und zumindest annähernd senkrecht auf der Radachse stehen.

Bei diesen Messflächen erweist es sich als vorteilhaft, dass die Messflächen an einer Haltevorrichtung der Achse angebracht sein können, so dass die Messung mit dieser Haltevorrichtung selbst durchgeführt werden kann unabhängig von der Achse. Das hat den Vorteil, dass die Messfläche an der Haltevorrichtung in den geometrischen Abmessungen und in der Beschichtung so ausgeführt ist, dass eine Messung der Geometrie der Achse mit hoher Auflösung und Genauigkeit durchgeführt werden kann.

Bei der Ausgestaltung nach Anspruch 6 wird die Geometrie der Hinterachse eines Kraftfahrzeugs im nicht eingebauten Zustand gemessen bzw. gemessen und eingestellt.

Ein Ausführungsbeispiel der Erfindung ist in der Zeichnung dargestellt. Es zeigt dabei:
- Fig. 1:: eine Vorrichtung, die im Rahmen des erfindungsgemäßen Verfahrens einsetzbar ist, dargestellt ohne Achse ;
- Fig. 2:: eine Vorrichtung, die im Rahmen des erfindungsgemäßen Verfahrens einsetzbar ist, dargestellt mit den Teilen der Achse, die von der Vorrichtung gehalten werden.

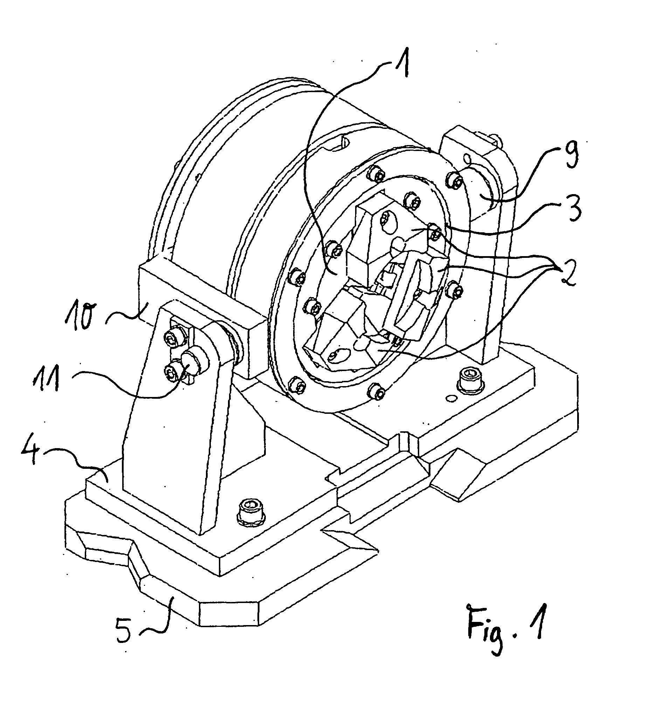

Figur 1 zeigt ein Spannfutter 1. Mittels dieses Spannfutters 1 können über Spannbacken 2, die durch das Spannfutter 1 ausrückbar sind, Haltekräfte ausgeübt werden.

Das Spannfutter 1 wird in einem Punkt auf seiner Mittelachse durch das Lager drehbar gehalten (3). Dadurch ist das Spannfutter 1 drehbar um eine Achse, die der Radachse eines an der Achse montierten Rades zumindest annähernd entspricht, die durch die Vorrichtung gehalten werden soll.

Hinsichtlich seiner Orientierung wird das Spannfutter 1 weiterhin so gehalten, dass es zum einen um eine vertikale Achse drehbar ist. Dadurch kann das Spannfutter 1 in seiner Orientierung Änderungen der Spurwinkels eines Rades folgen. Weiterhin ist die Orientierung des Spannfutters 1 vorteilhaft um eine Achse drehbar, die sich in horizontaler Ebene senkrecht zur Radachse erstreckt. Dadurch kann das Spannfutter 1 in seiner Orientierung Änderungen des Sturzwinkels des Rades folgen, die beispielsweise aus sich ändernden Gewichtsbelastungen der Achse resultieren können..

Das Gehäuse 4 ist mit einer Schwimmplatte 5 verbunden. Diese Schwimmplatte 5 ist in der horizontalen Ebene frei bewegbar. Dadurch kann das Spannfutter 1 Änderungen der Achse in horizontaler Richtung folgen, die der Radachse eines an der Achse montierten Rades entspricht. Dadurch kann das Spannfutter 1 also Änderungen des Spurwinkels folgen.

Der Zylinder 9 ist an einem Punkt einer Drehachse 11 drehbeweglich befestigt. Dadurch kann das Spannfutter 1 Änderungen des Sturzwinkels der Radachse folgen.

Weiterhin ist das Spannfutter 1 in einem Lager 3 gehalten, so dass das Spannfutter 1 um seine Mittelachse drehbar ist, die im Falle, dass die Achse richtig von der Vorrichtung aufgenommen wurde, der Radachse entspricht. Dadurch wird es beispielsweise möglich, entsprechend den Ausführungen in der Beschreibungseinleitung eine Mittelwertbildung bei der Messung vorzunehmen.

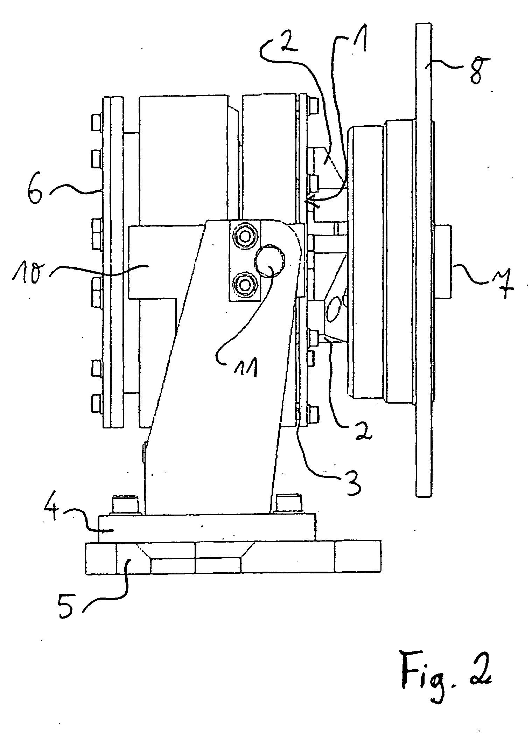

Figur 2 zeigt eine Vorrichtung mit den Teilen der Achse, die von der Vorrichtung während der Durchführung der Messung und ggf. der Einstellung des Spur- und/oder Sturzwinkels gehalten werden.

Es sind Spannbacken 2 des Spannfutters 1 zu sehen, mittels denen ein Radflansch 7 gehalten wird. Weiterhin ist eine Bremsscheibe 8 zu sehen. Außer den im Zusammenhang mit Figur 1 bereits erläuterten Bestandteilen der Vorrichtung ist eine Messfläche 6 zu sehen, mittels der die Orientierung der Radachse messbar ist.

Mittels einer in den Figuren 1 und 2 gezeigten Vorrichtung ist eine Achse an beiden Seiten lagerbar. Vorteilhaft können damit Spur- und/oder Sturzwinkel von Radachsen an Achsen von Fahrzeugen gemessen werden, insbesondere vor dem Einbau der Achse in das Fahrzeug.

## Patentansprüche

1. Verfahren, bei dem die Geometrie einer Radachse einer Achse eines Fahrzeugs gemessen bzw. gemessen und eingestellt wird wobei die Radflansche der Radachse während der Durchführung der Messung der Geometrie gehalten und stützend gelagert werden, **dadurch gekennzeichnet, dass** die Radflansche durch ein Spannfuttersystem (1) gehalten und stützend gelagert werden.

2. Verfahren nach Anspruch 1,
**dadurch gekennzeichnet, dass** das Spannfutter (1) so gelagert und gehalten wird, dass es zumindest um zwei Raumachsen drehbeweglich ist.

3. Verfahren nach Anspruch 2,
**dadurch gekennzeichnet, dass** die Achse während der Durchführung der Messung mit wechselnden Gewichtskräften beaufschlagt wird.

4. Verfahren nach einem der Ansprüche 1 bis 3,
**dadurch gekennzeichnet, dass** das Spannfutter (1) um seine Mittelachse drehbar gelagert ist (3).

5. Verfahren nach einem der Ansprüche 1 bis 4,
**dadurch gekennzeichnet, dass** Messflächen (6) vorhanden sind, die eben ausgebildet sind und fest und zumindest annähernd senkrecht auf der Radachse stehen.

6. Verfahren nach einem der vorhergehenden Ansprüche,
**dadurch gekennzeichnet, dass** die Geometrie der Hinterachse eines Kraftfahrzeugs im nicht eingebauten Zustand gemessen bzw. gemessen und eingestellt wird.

## Claims

1. A method by which the geometry of a wheel axis of a vehicle axle is measured or measured and adjusted, the wheel flange of the axle being held and supported while the geometry is measured,
**characterised in that** the wheel flange is held and supported by means of a chuck system (1).

2. Method according to claim 1,
**characterised in that** the chuck (1) is held and supported such as to be rotatable about at least two spatial axes.

3. Method according to claim 2,
**characterised in that** various weights are exerted on the axle during the measuring procedure.

4. Method according to one of claims 1 to 3,
**characterised in that** the chuck (1) is held in a bearing (3) such as to be rotatable about its central axis.

5. Method according to one of claims 1 to 4,
**characterised in that** fixed, planar measuring surfaces (6) are provided that are at least approximately perpendicular to the wheel axis.

6. Method according to one of the preceding claims,
**characterised in that** the geometry of a vehicle's rear axle is measured or measured and adjusted before the axle has been installed.

## Revendications

1. Procédé lors duquel la géométrie d'un axe de roue de l'axe d'un véhicule est déterminée, voire déterminée et reréglée, les brides de roue de l'axe de roue étant maintenues et logées en appui pendant la mesure de la géométrie, **caractérisé en ce que** les brides de roue sont maintenues et logées en appui par un système de mandrin de serrage (1).

2. Procédé selon la revendication 1, **caractérisé en ce que** le mandrin de serrage (1) est logé et maintenu de manière à pouvoir pivoter au moins autour de deux directions de l'espace.

3. Procédé selon la revendication 2, **caractérisé en ce que** des forces pondérales variables sont appliquées sur l'axe lors de la mesure lors de la réalisation de la mesure.

4. Procédé selon l'une des revendications 1 à 3, **caractérisé en ce que** le mandrin de serrage (1) est logé de manière à pouvoir pivoter autour de son axe médian (3).

5. Procédé selon l'une des revendications 1 à 4, **caractérisé en ce que** des surfaces de mesure (6) sont prévues qui sont planes et fixes et qui sont orientées au moins approximativement perpendiculairement à l'axe de roue.

6. Procédé selon l'une des revendications précédentes, **caractérisé en ce que** la géométrie de l'axe arrière d'un véhicule automobile est déterminée, voire déterminée et reréglée, à l'état démonté.
